# EUROPÄISCHE PATENTSCHRIFT

(11) **EP 4 484 196 B1**
(45) Veröffentlichungstag und Bekanntmachung des Hinweises auf die Patenterteilung: **07.10.2026**
(21) Anmeldenummer: 24172616.5
(22) Anmeldetag: 26.04.2024
(51) Int. Cl.: B60K 11/02, H01M 10/613, H01M 10/625, H01M 10/6568, H01M 10/658, H01M 50/249

(54) **BATTERIE MIT KÜHLSYSTEM**
BATTERY WITH COOLING SYSTEM
BATTERIE AVEC SYSTÈME DE REFROIDISSEMENT

(30) Priorität: 17.05.2023 DE 102023002016
(43) Veröffentlichungstag der Anmeldung: 01.01.2025
(73) Patentinhaber: Mercedes-Benz Group AG, 70372 Stuttgart (DE)
(72) Erfinder: NUESSLE, Ralf, 89150 Laichingen (DE); STEGMAIER, Timo, 89423 Gundelfingen an der Donau (DE)
(74) Vertreter: Novagraaf Group

(56) Entgegenhaltungen:
- EP-A1- 2 908 378
- DE-A1- 102009 035 480
- US-A1- 2017 088 009

## Beschreibung

Die Erfindung betrifft ein Batteriesystem mit einem Kühlkreislauf nach der im Oberbegriff von Anspruch 1 näher definierten Art. Außerdem betrifft die Erfindung ein Fahrzeug mit einem solchen Batteriesystem.

Batteriesysteme gemäß dem Oberbegriff des Hauptanspruchs sind aus dem Stand der Technik bekannt. Solche Batteriesysteme, welche Batteriemodule mit unterschiedlichen Zellchemien einsetzen, sind beispielsweise von der Firma ONE unter des Markenbezeichnung Gemini bekannt. Sie umfassen einen ersten Teil der Batteriesystems mit einer ersten Zellchemie, beispielsweise mit Lithium-Phosphat-Eisen-Zellen, und einen Teil mit einer zweiten Zellchemie, bei ONE anodenfreie Batterieeinzelzellen. Die Zellchemien sind darauf ausgelegt einerseits bei hoher Zyklenfestigkeit kurzzeitig geladen und entladen werden zu können und andererseits bei längeren Lade- und Entladedauern eine hohe Kapazität und Energiedichte bereitzustellen. Die erste Zellchemie weist typischerweise eine vergleichsweise geringe Energiedichte auf und dient, um beispielsweise beim Einsatz in einem Fahrzeug kurze Fahrten zu gewährleisten. Die zweite Zellchemie mit deutlich höherer Energiedichte innerhalb der Batteriemodule aber einer geringeren Zyklenfestigkeit kann dann genutzt werden, wenn das Fahrzeug über weite Strecken fährt, sodass Energie von den Batteriemodulen der zweiten Zellchemie für solche längeren Fahrten und damit einhergehende längere Entlade- und Ladezeiten bei geringeren Leistungen genutzt werden können.

Nachteilig ist bei dem Aufbau die Kühlung in den Batteriemodulen, welche entsprechend aufwändig ist und das gesamte Batteriesystem temperiert, obwohl dies je nach Einsatz gegebenenfalls gar nicht notwendig ist.

Eine weitere Hybridbatterie mit Zellen unterschiedlicher Zellchemie beschreibt die DE 10 2017 211 001 A1. Darin geht es im Wesentlichen darum, die Zellen räumlich derart anzuordnen, dass diese sich gegenseitig beim Aufrechterhalten der Betriebstemperatur unterstützen. Bei Bedarf kann hier außerdem eine Heizeinrichtung vorgesehen werden. Die DE 10 2013 021 111 A1 beschreibt außerdem einen Temperierungseinrichtung zum Beheizen oder Kühlen von Batteriemodulen, welche so ausgestaltet ist, dass jedes der Module unabhängig von den anderen temperiert werden kann.

Zum weiteren Stand der Technik kann außerdem auf die DE 10 2015 122 196 A1 verwiesen werden. Hierin ist ein Kühlkreislaufsystem für ein elektrisch angetriebenes Fahrzeug angegeben. Es umfasst zwei Kühlkreisläufe, die über eine Verbindungsleitung miteinander verbunden sind, wobei der eine Kühlkreislauf zur Kühlung der elektrischen Antriebskomponenten und der andere Kühlkreislauf zur Kühlung der Batterie ausgelegt ist. In der Verbindungsleitung kann außerdem ein elektrisches Ladegerät für die Batterie mit eingebunden sein.

Die EP 2 908 378 A1 beschreibt ein Batteriesystem gemäß dem Oberbegriff von Anspruch 1, mit zwei unterschiedlichen Typen von Batterien, die unabhängig voneinander beheizt und/oder gekühlt werden können. Dabei besteht die erste Gruppe z.B. aus herkömmlichen Li-Ionen oder Ni-Cd Zellen, die zweite Gruppe z.B. aus Festelektrolytzellen. Der Energieinhalt der ersten Gruppe dient unter anderem dazu, die Batteriezellen der zweiten Gruppe beim Start zu beheizen.

Aus der US 2017/0088009 A1 ist außerdem Fahrzeugantriebssystem bekannt, bei welchem eine Batterie mit hoher Leistung und eine Batterie mit hoher Kapazität zum Einsatz kommen. Diese werden mit demselben Kühlmedienstrom seriell nacheinander gekühlt.

Ferner beschreibt die DE 10 2009 035 480 A1 der Anmelderin eine Batterie, bei welcher unterschiedliche Module unterschiedlich gekühlt werden können, um die Kühler der Zellalterung der Batterieeinzelzellen der jeweiligen Gruppe anzupassen.

Die Aufgabe der hier vorliegenden Erfindung besteht nun darin bei einem sehr einfachen Aufbau eine effiziente Kühlung eines derartigen Batteriesystems zu gewährleisten, welche gleichzeitig ideale Bedingungen und damit eine lange Lebensdauer der Batteriemodule gewährleistet.

Das erfindungsgemäße Batteriesystem ist vergleichbar wie im Stand der Technik mit Batteriemodulen bzw. darin verbauten Einzelzellen einer ersten und einer zweiten Zellchemie aufgebaut. Die Batteriemodule der ersten und der zweiten Zellchemie sind jeweils örtlich beieinander angeordnet, bilden also einen ersten und einen zweiten Teilabschnitt einer Batterie des Batteriesystems aus. Dabei sind die Teilabschnitte benachbart zueinander in einem Batteriegehäuse angeordnet. Sie bilden also eine gemeinsam in einem Batteriegehäuse angeordnete Batterie aus und sind beispielsweise in Form von drei Batteriemodulen mit der ersten Zellchemie einerseits und vier Batteriemodulen mit der zweiten Zellchemie andererseits innerhalb dieses Batteriegehäuses angeordnet. Dabei ist zwischen den Teilabschnitten eine thermische Isolierung vorgesehen, sodass insbesondere in dem Fall, in dem die Batteriemodule der zweiten Zellchemie, also der zweite Teilabschnitt, nicht aktiv gekühlt werden soll, dessen thermische Belastung aufgrund der betriebsbedingten Erwärmung und der dann erfolgenden aktiven Kühlung des benachbarten ersten Teilabschnitts minimiert wird, um eine möglichst hohe Lebensdauer der Batteriemodule des zweiten Teilabschnitts zu erreichen.

Das Batteriesystem umfasst außerdem einen Kühlkreislauf, mittels welchem die Batteriemodule der ersten Zellchemie von einem Kühlmedium gekühlt sind. Ein einzelner Kühlkreislauf für das Batteriesystem reicht dabei aus, die Batteriemodule der ersten Zellchemie in grundlegend bekannter Art und Weise sicher und effizient zu kühlen. Das erfindungsgemäße Batteriesystem sieht es nun ferner vor, dass die Batteriemodule der zweiten Zellchemie entweder eine von dem Kühlkreislauf unabhängige Kühlung aufweisen oder von dem Kühlmedium des Kühlkreislaufs parallel zu den Batteriemodulen der ersten Zellchemie gekühlt sind, wobei über eine Ventileinrichtung in der Zuleitung für das Kühlmedium dessen Volumenstrom zwischen den Batteriemodulen der ersten Zellchemie und den Batteriemodulen der zweiten Zellchemie aufteilbar ist.

Mit der ersten Variante ist es so, dass hier eine andere Kühlung für die Batteriemodule der zweiten Zellchemie eingesetzt werden kann als für die Batteriemodule der ersten Zellchemie. Dies kann prinzipiell ein zweiter Kühlkreislauf oder ähnliches sein, was jedoch vergleichsweise aufwändig ist. Gemäß einer besonders günstigen Weiterbildung des erfindungsgemäßen Batteriesystems ist es daher so, dass die Batteriemodule der zweiten Zellchemie luftgekühlt sind. Diese werden also von der in ihrem Bereich befindlichen Luft gekühlt. Dafür kann eine aktiv geförderte oder passiv strömende Luftströmung ausgebildet sein. Die Luftkühlung kann jedoch auch nur dadurch realisiert werden, dass die Batteriemodule der zweiten Zellchemie sich in einem luftgefüllten Volumen befinden. Für das langsame Laden und Entladen dieser Batteriemodule der zweiten Zellchemie kann dies, je nach Auslegung des Batteriesystems, ausreichend sein. Über den Kühlkreislauf werden bei dieser Ausführung somit nur die Batteriemodule der ersten Zellchemie gekühlt. Er kann daher mit all seinen Komponenten entsprechend kleiner dimensioniert werden. Dies spart Energie, Bauraum, Bauvolumen und Kosten ein.

Die zweite mögliche Variante sieht es vor, dass über den einen gemeinsamen Kühlkreislauf die Batteriemodule beider Zellchemien gekühlt werden. Anders als im Stand der Technik, wo eine parallele Kühlung der Batteriemodule mit gleichen Kühlmedientemperaturen und Volumenströmen erfolgt, ist es bei dem Batteriesystem gemäß der Erfindung vorgesehen, dass über eine Ventileinrichtung der Volumenstrom des Kühlmediums durch die Batteriemodule der ersten Zellchemie und diejenigen der zweiten Zellchemie separat beeinflusst werden kann. Durch eine gezielte Aufteilung des Volumenstroms des Kühlmediums zwischen den beiden Teilabschnitten der Batterie des Batteriesystems können so durch die unterschiedlichen Volumenströme unterschiedliche Temperaturen innerhalb der Batteriemodule der jeweiligen Zellchemie realisiert werden. Hierdurch ist es möglich die Temperatur den Anforderungen der jeweiligen Zellchemie ideal anzupassen oder auf eine Kühlung derjenigen Batteriemodule gänzlich zu verzichten, welche in einer aktuellen Betriebsphase nicht betreiben werden. Hierdurch lassen sich immer ideale Temperaturen gewährleisten. Im Fall, dass beispielsweise die Batteriemodule der zweiten Zellchemie, ähnlich wie im eingangs beschriebenen Stand der Technik erläutert, bei kurzen Fahrten mit einem das Batteriesystem aufweisenden Fahrzeug nicht benötigt werden, werden diese dann gar nicht gekühlt. Hierdurch wird einerseits Förderleistung für eine Kühlmittelfördereinrichtung in dem Kühlkreislauf eingespart und andererseits, und dies ist der größere Vorteil, wird auf eine Erwärmung und Abkühlung der nicht genutzten Batteriemodule durch das Kühlmedium verzichtet, sodass thermischer Stress im Bereich dieser Batteriemodule vermieden wird, was sich positiv auf die erzielbare Lebensdauer auswirkt.

In dem erfindungsgemäßen Batteriesystems ist es dabei vorgesehen, dass die Batteriemodule der ersten Zellchemie eine höhere Zyklenfestigkeit und eine höhere Leistungsfähigkeit bei niedriger Energiedichte aufweisen als die Batteriemodule der zweiten Zellchemie.

Ferner kann es dabei so sein, dass gemäß einer sehr vorteilhaften Ausgestaltung des Batteriesystems gemäß der Erfindung mehr Batteriemodule der zweiten Zellchemie als Batteriemodule der ersten Zellchemie vorhanden sind. Mehr kann sich im Sinne der Erfindung dabei auf die reine Anzahl der Batteriemodule beziehen, soll insbesondere jedoch auch verdeutlichen, dass alle Batteriemodule der zweiten Zellchemie zusammen eine höhere Speicherkapazität aufweisen als diejenigen der ersten Zellchemie, sodass also über die erste Zellchemie eine Möglichkeit zur kurzfristigen Leistungsentnahme und Leistungsaufnahme gegeben ist, während den deutlich größeren Teil der Kapazität über die Batteriemodule der zweiten Zellchemie gewährleistet wird, welche entsprechend langsamer hinsichtlich des Ladens und des Entladens sind und nur dann eingesetzt werden sollen, wenn die Kapazität der Batteriemodule der ersten Zellchemie nicht ausreicht.

Der Kühlkreislauf selbst kann dabei eine Kühlmittelfördereinrichtung, einen Kühler bzw. Kühlwärmetauscher, ein Heizelement und eine über eine Bypassventileinrichtung in ihrer Durchströmung steuerbare Bypassleitung zu dem Kühler aufweisen. Ein solcher Kühlkreislauf lässt sich entsprechend einfach aufbauen. Für den Fall der Kühlung wird der Kühler durchströmt, welcher zusätzlich beispielsweise bei einer Fahrzeuganwendung mit Fahrtwind oder mit Luft über ein Gebläse durchströmt wird, um das Kühlmedium, welches insbesondere ein flüssiges Kühlmedium sein soll, abzukühlen. Ist eine Abkühlung nicht oder nur in geringem Maße gewünscht, kann ein Teil oder das ganze Kühlmedium über die Bypassleitung am Kühler vorbeigeführt werden. Bei Bedarf kann über den Kühlkreislauf außerdem geheizt werden, wofür vorzugsweise der Kühler nicht durchströmt wird und über eine Heizeinrichtung das Kühlmedium erwärmt wird. Der Kühlkreislauf ermöglicht so ein Thermomanagement der Batterie, also nicht nur eine Kühlung sondern auch eine Erwärmung derselben. Er dient also zur Temperierung der Batteriemodule und ermöglicht es so, diese schnellstmöglich auf ihre ideale Betriebstemperatur zu bringen und dort zu halten.

Im Falle der parallelen Kühlung der Batteriemodule der ersten und der zweiten Zellchemie über den einen gemeinsamen Kühlkreislauf kann die Ventileinrichtung dabei gemäß einer sehr vorteilhaften Weiterbildung als Drei-Wege-Ventil oder Drehschieberventil ausgebildet sein, um so den Volumenstrom des Kühlmediums zwischen den beiden Typen von Batteriemodule in der gewünschten Art und Weise aufteilen zu können, ausgehend von einer 100%igen Durchströmung der Batteriemodule der ersten Zellchemie bis hin zu einer ausschließlichen Durchströmung der Batteriemodule der zweiten Zellchemie, sofern dies erforderlich ist.

Gemäß einer außerordentlich günstigen Weiterbildung des Batteriesystems gemäß der Erfindung kann es ferner vorgesehen sein, dass die Batteriemodule der ersten Zellchemie elektrisch zwischen der Energiequelle oder dem Energieverbraucher und den Batteriemodulen der zweiten Zellchemie geschaltet sind. Die Batteriemodule der ersten Zellchemie dienen also immer als Puffer. Hierdurch kann mit annähernd beliebig hoher Dynamik geladen oder entladen werden. Die Batteriemodule der ersten Zellchemie sind so ausgestaltet, dass sie dies bei hoher Lebensdauer gut aushalten. Gleichzeitig geben sie entsprechend langsam elektrische Leistung an die Batteriemodule der zweiten Zellchemie weiter, wenn auch diese entsprechend geladen werden sollen oder werden von den Batteriemodulen der zweiten Zellchemie nachgeladen, wenn Leistung aus diesen entnommen werden soll. Hierdurch ist eine sehr effiziente elektrische Anbindung möglich, bei welcher dynamische Spitzen sowohl beim Entladen als auch beim Laden durch die Batteriemodule der ersten Zellchemie abgepuffert werden.

Wie schon mehrfach erwähnt eignet sich ein derartiges Batteriesystem insbesondere für ein Fahrzeug, und dort insbesondere als Speichereinrichtung für elektrische Antriebsleistung, bei einem zumindest teilweise elektrisch angetriebenen Fahrzeug. Das Batteriesystem lässt sich prinzipiell jedoch auch für andere Anwendungen nutzen, wobei es seine besonderen Vorteile bei der typischerweise von hoher Dynamik geprägten Bereitstellung von Antriebsleistung für ein Fahrzeug hat.

Weitere vorteilhafte Ausgestaltungen des erfindungsgemäßen Batteriesystems ergeben sich auch aus den Ausführungsbeispielen, welche nachfolgend unter Bezugnahme auf die Figuren näher dargestellt sind.

Dabei zeigen:
- Fig. 1: ein erfindungsgemäßes Batteriesystem mit einer ersten Kühlungsvariante; und
- Fig. 2: ein erfindungsgemäßes Batteriesystem mit einer zweiten Kühlungsvariante.

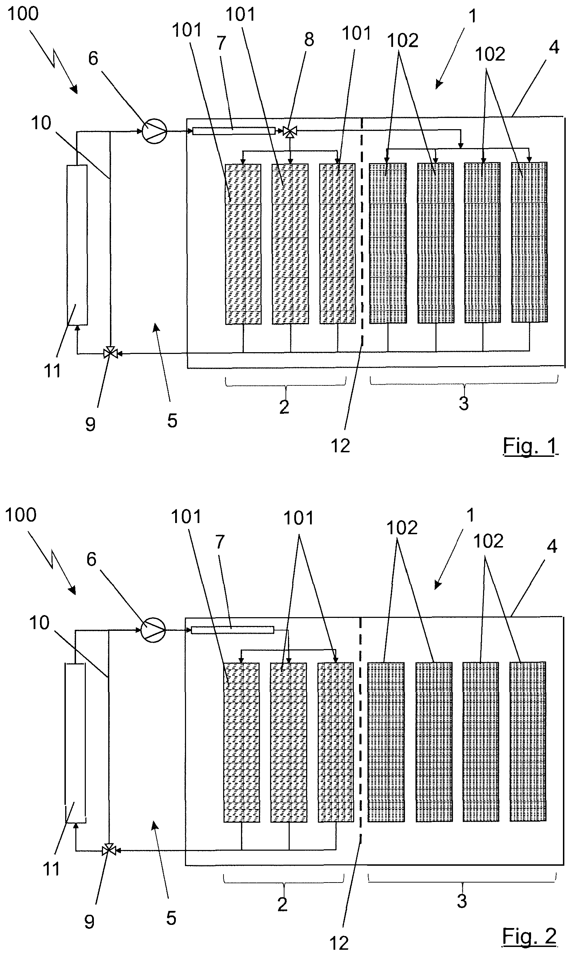

In der Darstellung der Figur 1 ist ein Batteriesystem 100 zu erkennen, welches eine Batterie 1 mit mehreren Batteriemodulen 101, 102 umfasst. Rein beispielhaft ist hier ein erster Teilabschnitt 2 der Batterie 1 mit drei Batteriemodulen 101 ausgestattet, welche Einzelzellen mit einer ersten Zellchemie aufweisen. Benachbart hierzu sind vier Batteriemodule 102 in einem zweiten Teilabschnitt 3 dargestellt, welche eine zweite Zellchemie aufweisen. Die Batteriemodule 101, 102 im Teilabschnitt 2 und im Teilabschnitt 3 sind dabei nebeneinander innerhalb eines Batteriegehäuses 4 angeordnet. Dabei ist eine hier durch eine gestrichelte Linie angedeutete thermische Isolierung 12 zwischen dem ersten Teilabschnitt 2 und dem zweiten Teilabschnitt 3 vorgesehen.

Der erste Teilabschnitt 2 umfasst dabei Batteriemodule 101 einer ersten Zellchemie, der zweite Teilabschnitt 3 umfasst Batteriemodule 102 einer zweiten Zellchemie. Dies ist durch die unterschiedliche Schraffur der jeweiligen Batteriemodule 101, 102 innerhalb des ersten Teilabschnitts 2 und des zweiten Teilabschnitts 3 angedeutet. Die Batteriemodule 101 des ersten Teilabschnitts 2 sollen hier beispielhaft mit einer Zellchemie ausgeführt sein, welche eine hohe Zyklenfestigkeit besitzt und hohe Laden- und Entladeleistungen ermöglicht. Jedoch haben diese Batteriemodule 101 keine allzu hohe Energiedichte. Die Zellchemie der Batteriemodule 102 im zweiten Teilabschnitt 3 verfügt dahingegen eher über eine reduzierte Zyklenfestigkeit, aber dafür über eine höhere Energiedichte. Bei der bevorzugten Anwendung in einem - nicht dargestellten - Fahrzeug ist es nun so, dass die Batteriemodule 101 im ersten Teilabschnitt 2 mit der ersten Zellchemie dazu verwendet werden, die Kurzstreckenfahrten zu gewährleisten und Energie aus Gleichstrom-Schnellladevorgängen aufzunehmen und damit entsprechend hohe Fahrleistungen bei vergleichsweise kurzen Fahrstrecken, wie sie typischerweise im Alltag auftreten, bereitzustellen. Der zweite Teilabschnitt 3 mit der zweiten Zellchemie dient dann eher dazu beim Gleichstrom-Schnellladen einen Teil der Energie aus dem ersten Teilabschnitt 2 aufzunehmen, wobei aufgrund der größeren Kapazität des zweiten Teilabschnitts 3 jedes der Batteriemodule 102 der zweiten Zellchemie hier nicht so stark belastet wird. Der zweite Teilabschnitt 3 dient dann überwiegend für Langstreckenfahrten und gibt dabei dann langsam Energie an den ersten Teilabschnitt 2 ab. Beim Fahren und Laden wird die Batterie 1 also immer so betrieben, dass die Energie immer zuerst aus dem ersten Teilabschnitt 2 mit der ersten Zellchemie entnommen oder von diesem aufgenommen wird, sodass der erste Teilabschnitt 2 als eine Art "Puffer" dient.

Soll nun bei kalter Umgebungstemperatur der erste Teilabschnitt 2 erwärmt werden, kann ein Kühlmedium in einem Kühlkreislauf 5 über eine Kühlmedienfördereinrichtung, beispielsweise eine Kühlmittelpumpe 6, umgewälzt werden. Über ein Heizelement 7, welches beispielsweise elektrisch mit Energie aus dem ersten Teilabschnitt 2 betrieben werden kann, kann das Kühlmedium aufgeheizt werden, um den ersten Teilabschnitt 2 zu erwärmen. Die Kühlmittelpumpe 6 fördert dabei das Kühlmedium durch das Heizelement 7 und über eine Ventileinrichtung 8 ausschließlich in den ersten Teilabschnitt 2, sodass dessen drei Batteriemodule 101 parallel von dem erwärmten Kühlmedium durchströmt und temperiert werden. Das Kühlmedium strömt dann zu einer Bypassventileinrichtung 9 und wird von dort über eine Bypassleitung 10, um einen Kühler 11 herum, zurück zu der Kühlmittelpumpe 6. Dies wird so lange fortgeführt, bis die Batteriemodule 101 des ersten Teilabschnitts 2 die erforderliche Temperatur erreicht haben. Im Anschluss wird dann über eine Ansteuerung der Bypassventileinrichtung 9, welche als Drei-Wege-Ventil oder Drehschieber ausgebildet ist, und/oder die Drehzahl der Kühlmittelpumpe 6 die Durchströmung so gesteuert, dass die ideale Temperatur beibehalten wird. Im regulären Betrieb wird dabei Abwärme aus den Batteriemodulen 101 des ersten Teilabschnitts 2 abgeführt. Solange ausschließlich elektrische Leistung aus dem ersten Teilabschnitt 2 benötigt bzw. dieser geladen wird, bleibt die Ventileinrichtung 8, welche beispielsweise als Drei-Wege-Ventil oder Drehschieber ausgebildet sein kann, so eingestellt, dass kein Kühlmedium durch den zweiten Teilabschnitt 3 strömt, was den Vorteil bietet, dass dieser Teilabschnitt 3 nicht erwärmt wird. Einerseits erfolgt so die Aufheizung des ersten Teilabschnitts 2 schneller und energieeffizienter, andererseits kann auf einen Zyklus von Erwärmung und Abkühlung der Batteriemodule 102 des zweiten Teilabschnitts 3 verzichtet werden, was sich positiv auf die Lebensdauer auswirkt.

Soll nun zum Beispiel mit dem Fahrzeug eine Langstrecke gefahren werden, so wird auch der zweite Teilabschnitt 3 mit den Batteriemodulen 102 der zweiten Zellchemie genutzt, da hier sehr viel Energie enthalten ist, welche eine hohe Reichweite ermöglicht. Je nach elektrischer Verschaltung sind dabei unterschiedliche Betriebsstrategien möglich. Dies spielt für die hier vorliegende Idee der optimierten Kühlung jedoch eine untergeordnete Rolle, sodass hierauf nicht weiter eingegangen werden muss. Ist bei dem Aufbau des Batteriesystems 100 gemäß Figur 1 nun in einem solchen Fall auch der zweite Teilabschnitt 3 der Batterie 1 noch vergleichsweise kalt, beispielsweise aufgrund einer sehr niedrigen Außentemperatur, wird nun, wenn der zweite Teilabschnitt 3 ebenfalls betrieben wird, der Volumenstrom des Kühlmediums zumindest teilweise auch durch den zweiten Teilabschnitt 3 der Batterie 1 geführt, um dessen Batteriemodule 102 zu temperieren. Über die Kreislaufführung und die parallele Durchströmung des ersten Teilabschnitt 2 und des zweiten Teilabschnitts 3 mit den jeweils gewünschten Volumenströmen des Kühlmediums wird dann die Abwärme aus dem ersten Teilabschnitt 2 genutzt, um die in diesem Fall als Wärmesenke arbeitenden Batteriemodule 102 des zweiten Teilabschnitts 3 zu erwärmen. Über die Bypassventileinrichtung 9 kann in diesem Fall die Durchströmung des Kühlers 11 unterbunden werden, um alle Batteriemodule 101, 102 innerhalb der Batterie 1 entsprechend zu erwärmen oder auf Temperatur zu halten. Bei Bedarf kann auch in dieser Phase über das Heizelement 7 nachgeheizt werden.

Haben nun alle Batteriemodule 101, 102 ihre Betriebstemperatur erreicht, kann die Abfuhr von Abwärme über den Kühler 11 erfolgen. Über die Ventileinrichtung 8 kann dabei der Volumenstrom des Kühlmediums so zwischen den beiden Teilabschnitten 2, 3 aufgeteilt werden, dass sich dort die jeweils gewünschten Temperaturen einstellen, sodass beide Teilabschnitte 2, 3 mit ihrer jeweiligen ersten und zweiten Zellchemie bei den für diese Zellchemie idealen Betriebstemperaturen betrieben werden können. Auch dies wirkt sich positiv auf die Lebensdauer der Batterie 1 aus.

Die Darstellung der Figur 2 zeigt einen sehr ähnlichen Aufbau des Batteriesystems 100 wie die Darstellung in Figur 1. Dieselben Bauteile sind dabei mit denselben Bezugszeichen versehen. Der wesentliche Unterschied liegt nun darin, dass der zweite Teilabschnitt 3 mit den Batteriemodule 102 der zweiten Zellchemie über keine Kühlung durch den Kühlkreislauf 5 verfügt. Die Kühlung erfolgt hier aufgrund von natürlichen Konvektionsprozessen innerhalb des Batteriegehäuses 4. alternativ dazu könnte auch eine Durchströmung mit Umgebungsluft vorgesehen sein, welche durch ein hier nicht dargestelltes Gebläse und/oder den Fahrtwind sowie ggf. eine Jalousie steuerbar ist.

Ob es nun sinnvoll ist, eine aktive Temperierung des zweiten Teilabschnitts 3 vorzusehen, wie in Figur 1, oder auf diese zu verzichten, wie in Figur 2, hängt dabei im Wesentlichen von der jeweiligen Gesamtkonfiguration ab. Diese umfasst die Aufteilung der Anzahl bzw. Kapazität der Batteriemodule 101, 102 mit der ersten Zellchemie und der zweiten Zellchemie, die thermischen Massen des ersten und des zweiten Teilabschnitts 2, 3 und welche Lade- und Entladeleistungen sowie C-Raten, und damit letztlich Erwärmungsprozesse, zugelassen werden. Grundsätzlich kann es aber durchaus Gesamtkonfigurationen geben, bei welchen es sinnvoll und vorteilhaft ist, auf eine Kühlung des zweiten Teilabschnitts 3 gänzlich zu verzichten, wie es in der Darstellung der Figur 2 angedeutet ist. Dies reduziert den benötigten Bauraum, die Anzahl an Bauteilen und damit das Gewicht. Außerdem bietet es Kostenvorteile. Durch die geringere Menge an benötigtem Kühlmedium ist es außerdem möglich die Kühlung für den ersten Teilabschnitt 2 mit den Batteriemodule 101 der ersten Zellchemie sehr viel dynamischer zu betreiben, was sich positiv auf deren Performance und Lebensdauer auswirken kann.

## Patentansprüche

1. Batteriesystem (100) mit einem Kühlkreislauf (5) und mit wenigstens einer Batterie (1), welche mehreren Batteriemodule (101, 102) aufweist, wobei ein erster Teil der Batteriemodule (101) eine erste Zellchemie und ein zweiter Teil der Batteriemodule eine zweite Zellchemie (102) aufweist, wobei die Batteriemodule (101) der ersten Zellchemie einen ersten Teilabschnitt (2) und die Batteriemodule (102) der zweiten Zellchemie einen zweiten Teilabschnitt (3) der Batterie (1) ausbilden, wobei die Teilabschnitte (2, 3) benachbart zueinander in einem Batteriegehäuse (4) angeordnet sind, wobei zwischen den beiden Teilabschnitten (2, 3) eine thermische Isolierung (12) vorgesehen ist, und wobei die Batteriemodule (101) der ersten Zellchemie von einem Kühlmedium des Kühlkreislaufs (5) gekühlt sind, wobei die Batteriemodule (102) der zweiten Zellchemie entweder eine von dem Kühlkreislauf (5) unabhängige Kühlung aufweisen, oder von dem Kühlmedium des Kühlkreislaufs (5) parallel zu den Batteriemodulen (101) der ersten Zellchemie gekühlt sind, wobei eine Zuleitung für das Kühlmedium zu den Batteriemodulen (101, 102) der ersten und der zweiten Zellchemie wenigstens eine Ventileinrichtung (8) aufweist, mittels welcher das Kühlmedium zwischen den Batteriemodulen (101, 102) der ersten und der zweiten Zellchemie aufteilbar ist,
**dadurch gekennzeichnet, dass**
die Batteriemodule (101) der ersten Zellchemie eine höhere Zyklenfestigkeit und eine höhere Leistungsfähigkeit bei niedrigerer Energiedichte aufweisen als die Batteriemodule (102) der zweiten Zellchemie.

2. Batteriesystem (100) nach Anspruch 1,
**dadurch gekennzeichnet, dass**
mehr Batteriemodule (102) der zweiten Zellchemie als Batteriemodule (101) der ersten Zellchemie vorgesehen sind.

3. Batteriesystem (100) nach einem der Ansprüche 1 bis 2,
**dadurch gekennzeichnet, dass**
der Kühlkreislauf (5) eine Kühlmittelfördereinrichtung (6), einen Kühler (11), ein Heizelement (7) und eine über eine Bypassventileinrichtung (9) in ihrer Durchströmung steuerbare Bypassleitung (10) zu dem Kühler (11) aufweist.

4. Batteriesystem (100) nach einem der Ansprüche 1 bis 3,
**dadurch gekennzeichnet, dass**
bei paralleler Kühlung der Batteriemodule (101, 102) der ersten und der zweiten Zellchemie die Ventileinrichtung (8) als ein Drei-Wege-Ventil und/oder als Drehschieberventil ausgebildet ist.

5. Batteriesystem (100) nach einem der Ansprüche 1 bis 3,
**dadurch gekennzeichnet, dass**
bei getrennter Kühlung der Batteriemodule (101, 102) der ersten und der zweiten Zellchemie die Batteriemodule (102) der zweiten Zellchemie luftgekühlt sind.

6. Batteriesystem (100) nach einem der Ansprüche 1 bis 5,
**dadurch gekennzeichnet, dass**
die Batteriemodule (101) der ersten Zellchemie elektrisch zwischen einer Energiequelle oder einem Energieverbraucher und den Batteriemodulen (102) der zweiten Zellchemie geschaltet sind.

7. Fahrzeug mit einem Batteriesystem (100) nach einem der Ansprüche 1 bis 6, insbesondere zur Bereitstellung von elektrischer Antriebsleistung.

## Claims

1. Battery system (100) having a cooling circuit (5) and having at least one battery (1) which has multiple battery modules (101, 102), with a first part of the battery modules (101) having a first cell chemistry and a second part of the battery modules having a second cell chemistry (102), the battery modules (101) of the first cell chemistry forming a first sub-portion (2) and the battery modules (102) of the second cell chemistry forming a second sub-portion (3) of the battery (1), the sub-portions (2, 3) being adjacent to one another in a battery housing (4), with thermal insulation (12) being provided between the two sub-portions (2, 3), and the battery modules (101) of the first cell chemistry being cooled by a cooling medium of the cooling circuit (5), the battery modules (102) of the second cell chemistry either having cooling independent of the cooling circuit (5) or being cooled by the cooling medium of the cooling circuit (5) in parallel with the battery modules (101) of the first cell chemistry, with a supply line for the cooling medium to the battery modules (101, 102) of the first and the second cell chemistry having at least one valve device (8) by means of which the cooling medium can be divided between the battery modules (101, 102) of the first and the second cell chemistry,
**characterized in that**
the battery modules (101) of the first cell chemistry have a higher cycle stability and higher performance at a lower energy density than the battery modules (102) of the second cell chemistry.

2. Battery system (100) according to claim 1,
**characterized in that**
more battery modules (102) of the second cell chemistry than battery modules (101) of the first cell chemistry are provided.

3. Battery system (100) according to either of claims 1 to 2,
**characterized in that**
the cooling circuit (5) comprises a coolant delivery device (6), a cooler (11), a heating element (7) and a bypass line (10) to the cooler (11), it being possible for the flow of the bypass line to be controlled by means of a bypass valve device (9).

4. Battery system (100) according to any of claims 1 to 3,
**characterized in that**
when the battery modules (101, 102) of the first and the second cell chemistry are cooled in parallel, the valve device (8) is designed as a three-way valve and/or as a rotary slide valve.

5. Battery system (100) according to any of claims 1 to 3,
**characterized in that**
when the battery modules (101, 102) of the first and the second cell chemistry are cooled separately, the battery modules (102) of the second cell chemistry are air-cooled.

6. Battery system (100) according to any of claims 1 to 5,
**characterized in that**
the battery modules (101) of the first cell chemistry are electrically connected between an energy source or an energy consumer and the battery modules (102) of the second cell chemistry.

7. Vehicle having a battery system (100) according to any of claims 1 to 6, in particular for providing electric drive power.

## Revendications

1. Système de batterie (100) comportant un circuit de refroidissement (5) et au moins une batterie (1), laquelle présente plusieurs modules de batterie (101, 102), dans lequel une première partie des modules de batterie (101) présente une première chimie cellulaire et une seconde partie des modules de batterie présente une seconde chimie cellulaire (102), dans lequel les modules de batterie (101) de la première chimie cellulaire forment une première sous-section (2) et les modules de batterie (102) de la seconde chimie cellulaire forment une seconde sous-section (3) de la batterie (1), dans lequel les sous-sections (2, 3) sont disposée de manière adjacente l'une à l'autre dans un boîtier de batterie (4), dans lequel une isolation thermique (12) est prévue entre les deux sous-sections (2, 3), et dans lequel les modules de batterie (101) de la première chimie cellulaire sont refroidis par un milieu de refroidissement du circuit de refroidissement (5), dans lequel les modules de batterie (102) de la seconde chimie cellulaire présentent soit un système de refroidissement indépendant du circuit de refroidissement (5), soit sont refroidis par le milieu de refroidissement du circuit de refroidissement (5) en parallèle avec les modules de batterie (101) de la première chimie cellulaire, dans lequel une conduite d'amenée du milieu de refroidissement vers les modules de batterie (101, 102) de la première et de la seconde chimie cellulaire présente au moins un dispositif de vanne (8) à l'aide duquel le milieu de refroidissement peut être réparti entre les modules de batterie (101, 102) de la première et de la seconde chimie cellulaire,
**caractérisé en ce que**
les modules de batterie (101) de la première chimie cellulaire présentent une meilleure résistance aux cycles et des performances supérieures, tout en ayant une densité énergétique inférieure à celle des modules de batterie (102) de la seconde chimie cellulaire.

2. Système de batterie (100) selon la revendication 1,
**caractérisé en ce**
**qu'**il est prévu davantage de modules de batterie (102) de la seconde chimie cellulaire que de modules de batterie (101) de la première chimie cellulaire.

3. Système de batterie (100) selon l'une des revendications 1 à 2,
**caractérisé en ce que**
le circuit de refroidissement (5) présente un dispositif d'acheminement de réfrigérant (6), un radiateur (11), un élément chauffant (7) et une conduite de dérivation (10) vers le radiateur (11), conduite de dérivation dont le débit peut être régulé par l'intermédiaire d'un dispositif de vanne de dérivation (9).

4. Système de batterie (100) selon l'une des revendications 1 à 3,
**caractérisé en ce que**
lorsque le refroidissement des modules de batterie (101, 102) de la première et de la seconde chimie cellulaire se fait en parallèle, le dispositif de vanne (8) est conçu comme une vanne à trois voies et/ou comme une vanne à tiroir rotatif.

5. Système de batterie (100) selon l'une des revendications 1 à 3,
**caractérisé en ce que**
lorsque le refroidissement des modules de batterie (101, 102) de la première et de la seconde chimie cellulaire est séparé, les modules de batterie (102) de la seconde chimie cellulaire sont refroidis à l'air.

6. Système de batterie (100) selon l'une des revendications 1 à 5,
**caractérisé en ce que**
les modules de batterie (101) de la première chimie cellulaire sont connectés électriquement entre une source d'énergie ou un consommateur d'énergie et les modules de batterie (102) de la seconde chimie cellulaire.

7. Véhicule comportant un système de batterie (100) selon l'une des revendications 1 à 6, destiné en particulier à fournir une puissance d'entraînement électrique.
